# EUROPÄISCHE PATENTSCHRIFT

(11) **EP 3 300 607 B1**
(45) Veröffentlichungstag und Bekanntmachung des Hinweises auf die Patenterteilung: **10.04.2024**
(21) Anmeldenummer: 17184233.9
(22) Anmeldetag: 01.08.2017
(51) Int. Cl.: A23C 9/142, A23C 21/00, A23J 3/08, A23P 30/40, A23C 9/13, A23C 9/152, A23C 13/14, A23C 21/06

(54) **VERFAHREN ZUR HERSTELLUNG EINER AUFSCHÄUMBAREN MILCHZUBEREITUNG**
PROCESS FOR PRODUCING A FOAMABLE MILK COMPOSITION
PROCEDE DE PRODUCTION D'UNE COMPOSITION DE LAIT MOUSSABLE

(30) Priorität: 28.09.2016 EP 16191066; 23.12.2016 DE 202016107358 U
(43) Veröffentlichungstag der Anmeldung: 04.04.2018
(73) Patentinhaber: DMK Deutsches Milchkontor GmbH, 27404 Zeven (DE)
(72) Erfinder: Bode, Katja, 21279 Hollenstedt (DE); Cervantes Sanvicente, Paola, 28832 Achim (DE)
(74) Vertreter: Fabry, Bernd

(56) Entgegenhaltungen:
- WO-A1-00/48473
- WO-A1-2006/034856
- WO-A1-2016/128623
- DE-A1- 3 219 956
- US-A- 5 935 632
- "HOW INGREDIENTS HELP SOLVE BEVERAGE PROBLEMS", FOOD TECHNOLOGY, INSTITUTE OF FOOD TECHNOLOGISTS, CHICAGO, IL, US, Bd. 55, Nr. 10, Oktober 2001 (2001-10), XP001108331, ISSN: 0015-6639
- KAMMERLEHNER J: "SIMPLESSE 100 - DRY SIMPLESSE 100. \SPEZIFISCHE PRODUKTE AUS MOLKE ZUR AUFWERTUNG VON LEBENSMITTELN", DMZ. LEBENSMITTELINDUSTRIE UND MILCHWISSENSCHAFT, VOLKSWIRTSCHAFTLICHER VERLAG GMBH. MUNCHEN, DE, Bd. 114, Nr. 29, 15. Juli 1993 (1993-07-15), Seiten 848-850,852, XP000381847, ISSN: 0938-9369
- TOSI ET AL: "Foaming properties of sweet whey solutions as modified by thermal treatment", FOOD CHEMISTRY, ELSEVIER LTD, NL, Bd. 100, Nr. 2, 1. Januar 2007 (2007-01-01), Seiten 794-799, XP005518718, ISSN: 0308-8146, DOI: 10.1016/J.FOODCHEM.2005.11.001
- DATABASE FSTA [Online] INTERNATIONAL FOOD INFORMATION SERVICE (IFIS), FRANkFURT-MAIN, DE; 2005, ANONYMOUS: "Airy plants.", XP002774931, Database accession no. FS-2005-10-Gg0860

## Beschreibung

### GEBIET DER ERFINDUNG

Die Erfindung befindet sich auf dem Gebiet der Molkereiprodukte und betrifft ein Verfahren zur Herstellung von Milchprodukten sowie die Verwendung von Milchpermeaten in Pulverform zur Besserung der Schaumbildung der Milchprodukte.

### STAND DER TECHNIK

Für viele Kaffeespezialitäten sind Milchschäume unentbehrlich. Sie entstehen durch das Aufschäumen von Milch oder Milchprodukten, wobei deren Eiweiße und Fette Strukturen bilden, die Luftbläschen umschließen. Bei der Zubereitung von Milchschaum für verschiedene auf Kaffee, insbesondere Espresso basierende Getränke wie Latte macchiato oder Cappuccino wird Milch mit Luft durchmischt. Die Porengröße des Schaumes ist außer vom Fettgehalt und der Temperatur der Milch auch von der Dauer der Zubereitung abhängig. Durch Kontrolle dieser Parameter variiert man die chemischen Gleichgewichte in der Emulsion. Physikalische und chemische Einflussfaktoren der Milchschäume werden beschrieben in der Dissertation von K. Borcherding mit dem Titel "Untersuchungen zur Charakterisierung der Makro- und Mikrostruktur von Milchschäumen", Universität Kiel (urn:nbn:de:gbv:8-diss-13056) aus dem Jahre 2004.

Die WO 0048473 (24.08.2000) offenbart ein Verfahren zur Herstellung eines Konzentrats denaturierter Molkenproteinaggregate und ein mit diesem Verfahren erhältliches stabiles Schaumprodukt.

Automaten zur Herstellung von Kaffeegetränken, die mit einer zusätzlichen Vorrichtung zur Herstellung von Milchschaum versehen sind, sind ebenfalls hinreichend bekannt, beispielsweise aus EP 2658420 A1 (JURA).

Nachteilig ist, dass der Schaum insbesondere bei maschineller Zubereitung häufig rasch zusammenfällt, was zwar keinen geschmacklichen Mangel bewirkt, das Getränk aber optisch nicht mehr ansprechend erscheinen lässt. Ebenfalls von Nachteil ist, dass in Abhängigkeit der verwendeten Milch mitunter erst gar keine ausreichende Menge an Schaum erzeugt wird.

Die Aufgabe der vorliegenden Erfindung hat daher darin bestanden, Milchprodukte zur Verfügung zu stellen, die sich dadurch auszeichnen, dass sie beim Aufschäumen einen kräftigen und beständigen Schaum entwickeln. Weiterhin bevorzugt wäre es, wenn durch den Zusatz einer schäumenden Verbindung auch noch eine geschmackliche Verbesserung erzielt würde.

### BESCHREIBUNG DER ERFINDUNG

Ein erster Gegenstand der Erfindung betrifft ein Verfahren zur Herstellung einer aufschäumbaren Milchzubereitung, umfassend die folgenden Schritte:
(a1) Bereitstellen eines ersten Milchproduktes ausgewählt aus der Gruppe, die gebildet wird von Magermilch, im Fettgehalt eingestellter Milch, pasteurisierter Milch, hocherhitzter Milch, ultrahocherhitzter Milch, Kondensmilch, Molke, Edelmolke, Buttermilch, Sauermilch, Sauermilchprodukte, Rahm, Sahne, Joghurt, Kefir und Ayran sowie deren Gemische;
(a2) Bereitstellen einer Magermilch;
(a3) Unterwerfen der Magermilch einer Ultrafiltration unter Erhalt eines Permeats und eines Retentats, wobei die Ultrafiltration mit einer Membran mit einem mittleren Porendurchmesser im Bereich von etwa 15.000 bis etwa 25.000 Dalton und bei Temperaturen im Bereich von 35 bis 60 °C durchgeführt wird;
(a4) Wärmebehandlung über einen Zeitraum von etwa 4 Sekunden bis 5 Minuten bei einer Temperatur von etwa 90 bis 140°C des Permeats des Schritts (a3);
(a5) Trocknung des temperaturbehandelten Permeats des Schritts (a4) mittels Sprühtrocknung unter Erhalt eines Permeatpulvers;
(a6) Bereitstellen einer dritten Komponente ausgewählt aus der Gruppe bestehend aus tierischen Proteinen, pflanzlichen Proteinen, Hydrokolloiden, Emulgatoren, Zucker, Salzen oder deren Gemische;
(a7) Bereitstellen einer Mischung aus dem ersten Milchprodukt des Schrittes (a1), dem Permeatpulver des Schritts (a5), und der dritten Komponente des Schrittes (a6);
(a8) Wärmebehandlung der Mischung aus dem Schritt (a7) unter Erhalt eines flüssigen Produkts oder Trocknung der Mischung aus dem Schritt (a7) unter Erhalt eines Pulvers;
(a9) Kühlung des flüssigen Produktes oder gegebenenfalls des Pulvers des Schrittes (a8); und
(a10) Abfüllung des flüssigen Produktes oder des Pulvers des Schrittes (a9) oder des Pulvers des Schrittes (a8).

Überraschenderweise wurde gefunden, dass schon der Zusatz geringer Mengen an getrockneten Milchpermeaten dazu führt, dass die Milchprodukte beim Aufschlagen mehr Schaum bilden und dieser Schaum auch länger bestehen bleibt.

Darüber hinaus wurde überraschenderweise gefunden, dass durch den weiteren Zusatz von Stoffen, die die dritte Komponente bilden, eine weitere Verbesserung der Schaumstabilität erreicht wird.

Als Zusatzstoff für die Milchprodukte, die ein stärkeres Schäumen und einen längeren Schaumbestand ermöglichen kommen Permeate aus der Ultrafiltration einer Magermilch in Frage. Derartige "Milchpermeate" insbesondere Permeate auf Basis von Magermilch sind seit langem bekannt. Es handelt sich um wässrige Flüssigkeiten, die bei der Filtration anfallen und bei der dem Einsatzprodukt Eiweiß und Milchfett entzogen wird. Zurück bleiben Vitamine, Mineralstoffe und Lactose.

Der Anwendungsbereich für Milchpermeate ist derzeit überschaubar: wenn die Fraktionen nicht im Prozess direkt weiterverwendet werden, wie beispielsweise bei der Gewinnung von Speisequark (vgl. z.B. DE 10 2012 10049511, FINNAH), dienen sie insbesondere zur Herstellung der türkischen Spezialität Ayran, der aus Wasser, verdünntem Joghurt und Salz besteht. Darüber hinaus kann Milchpermeat als Kulturmedium für verschiedene Mikroorganismen dienen **(**EP 2725098 A1, QUEIZUAR) oder als Bestandteil von ballaststoffreichen Nahrungsmitteln **(**EP 2887814 B1, GERVAIS).

Als erstes Milchprodukt in Schritt (a1) kommen im Sinne der vorliegenden Erfindung Magermilch, im Fettgehalt eingestellte Milch, pasteurisierte Milch, hocherhitzte Milch, ultrahocherhitzte Milch, Kondensmilch, Molke, Edelmolke, Buttermilch, Sauermilch, Sauermilchprodukte, Rahm, Sahne, Joghurt, Kefir und Ayran sowie deren Gemische in Betracht.

In einer bevorzugten Ausführungsform weist das erste Milchprodukt einen Fettgehalt von mindestens 1,5 Gew.-% auf.

In einer weiteren bevorzugten Ausführungsform handelt es sich um Magermilch (≤ 0,3 Gew.-% Fettgehalt) oder Milch mit einem Fettgehalt von 3,5 Gew.-%.

Zur Herstellung der Permeate wird Magermilch einer Ultrafiltration unterworfen. Dabei wird die Ultrafiltration mit einer Membran mit einem mittleren Porendurchmesser im Bereich von etwa 15.000 bis etwa 25.000 Dalton und bei Temperaturen im Bereich von etwa 35 bis etwa 60 °C und vorzugsweise etwa 40 bis etwa 55 °C durchgeführt.

Es hat sich herausgestellt, dass die aufschäumbaren Milchzubereitungen die besseren Ergebnisse insbesondere in Hinblick auf die Schaumstabilität aufweisen, wenn die Permeate einer Wärmebehandlung unterworfen werden (Schritt (a4)). Darunter ist zu verstehen, die Permeate vorzugsweise über einen Zeitraum von etwa 4 Sekunden bis 5 Minuten und insbesondere etwa 8 Sekunden bis 4 Minuten auf eine Temperatur von etwa 90 bis 140 °C zu erhitzen.

Gemäß des Schrittes (a5) wird das temperaturbehandelte Permeat mittels Sprühtrockung getrocknet, so dass ein Permeat in Pulverform erhalten wird. Bei der Sprühtrockung beträgt die Temperatur im Einlass typischerweise etwa 160 bis etwa 260 °C und am Ausgang etwa 60 bis etwa 105 °C.

Bevorzugt weisen die Permeate in Pulverform eine Trockenmasse von 85 bis 98 Gew.-% auf, insbesondere bevorzugt 95 Gew.-%.

In einer weiteren bevorzugten Ausführungsform, liegt der Gehalt an Lactose der Permeate in Pulverform im Bereich von 72 bis 90 Gew.-%, insbesondere im Bereich von 76 bis 86 Gew.-%.

Gemäß des Schrittes (a6) wird eine dritte Komponente ausgewählt aus der Gruppe bestehend aus tierischen Proteinen, pflanzlichen Proteinen, Hydrokolloiden, Emulgatoren, Zucker, Salzen oder deren Gemische bereitgestellt. Bezüglich dieser dritten Komponente gelten die Ausführungen von oben bezogen auf die zusätzlichen Stoffe (Komponente (c) der erfindungsgemäßen aufschäumbaren Milchzubereitungen. Es hat sich herausgestellt, dass die Kombination der oben genannten Permeate in Pulverform mit mindestens einem zusätzlichen Stoff ausgewählt aus der Gruppe bestehend aus tierischen Proteinen, pflanzlichen Proteinen, Hydrokolloiden, Emulgatoren, Zucker, Salzen und deren Gemischen einen positiven Einfluss auf die Schaumstabilität und die geschmacklichen Eigenschaften der Zubereitungen haben.

In einer bevorzugten Ausführungsform, enthält oder besteht die dritte Komponente aus mindestens zwei zusätzlichen Stoffen, die aus der Gruppe bestehend aus tierischen Proteinen, pflanzlichen Proteinen, Hydrokolloiden, Emulgatoren, Zucker, Salzen und deren Gemischen ausgewählt sind.

Als bevorzugtes tierisches Protein im Sinne der vorliegenden Erfindung ist Milcheiweiß zu nennen.

In einer bevorzugten Ausführungsform sind die pflanzlichen Proteine ausgewählt aus der Gruppe bestehend aus Weizen-, Soja-, Erbsen-, Lupine-, Kichererbsen-, Luzerne-, Ackerbohne-, Linsen-, Bohnen-, Raps-, Sonnenblumenproteinen und deren Mischungen, insbesondere ausgewählt aus der Gruppe bestehend aus Weizen-, Soja und Erbsenproteinen und deren Mischungen.

In einer weiteren bevorzugten Ausführungsform sind die Hydrokolloide ausgewählt aus der Gruppe bestehend aus Natriumalginat, Kaliumalginat, Ammoniumalginat, Calciumalginat, Propylenglycolalginat, Agar Agar, Carrageen (vorzugsweise κ-. 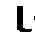 - und λ-Carrageen), Furcelleran, Traganth, Gummi arabicum, Xanthan, Gellan, Pektin, Opekta, Amidiertes Pektin, Mikrokristalline Cellulose, Cellulosepulver, Methylcellulose, Ethylcellulose, Hydroxypropylcellulose, Methylethylcellulose, Carboxymethylcellulose, Natriumcarboxymethylcellulose und deren Gemischen, vorzugsweise ausgewählt aus der Gruppe bestehend aus Natriumalginat, Kaliumalginat, Ammoniumalginat, Calciumalginat, Propylenglycolalginat, Agar Agar, Carrageen (vorzugsweise κ-. 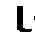 - und λ-Carrageen), Carboxymethylcellulose, Natriumcarboxymethylcellulose und deren Gemische, und insbesonders bevorzugt ausgewählt aus der Gruppe bestehend aus Natriumalginat, Carrageen (vorzugsweise κ-, 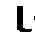 - und λ-Carrageen), und deren Gemischen, zu nennen.

In einer ganz besonders bevorzugten Ausführungsform ist das Hydrokolloid Natriumalginat.

In einer bevorzugten Ausführungsform sind die Emulgatoren ausgewählt aus der Gruppe bestehend aus Ascorbylpalmitat, Lezithin, Phosphorsäure, Natriumphosphat, Kaliumphosphat, Kalziumphosphat, Magnesiumortho-phosphat, Propylenglykolalginat, Polyoxyethylen(8)stearat, Polyoxyethylenstearat, Ammoniumphosphatide, Natriumphosphat, Kaliumphosphat, Natriumsalze der Speisefettsäuren, Mono- und Diglyceride von Speisefettsäuren, Essigsäuremonoglyceride, Milchsäuremonoglyceride, Zitronensäuremonoglyceride, Weinsäuremonoglyceride, Diacetylweinsäuremonoglyceride, Zuckerester von Speisefettsäuren, Zuckerglyceride, Polyglyceride von Speisefettsäuren, Polyglycerin-Polyricinoleat, Propylenglykolester von Speisefettsäuren, Natriumstearoyllaktylat, Calciumstearoyl-2-lactylat, Stearyltartrat, Sorbitanmonostearat, Stearinsäure und deren Gemischen zu nennen.

Im Sinne der vorliegenden Erfindung kommen ein Vielfaches an Zuckersorten in Betracht. Die Zuckersorten, die nach der vorliegenden Erfindung Verwendung finden können, umfassen alle streufähigen Zucker, die in gepulverter, fein-, mittel oder grobkörnig kristalliner Form oder auch gelöst in leicht viskoser Form vorliegen.

In einer bevorzugten Ausführungsform sind die Zucker ausgewählt aus der Gruppe bestehend aus Sucrose, Saccharose, Trehalose, Laktose, Dextrose, Maltose, Melizitose, Raffinose, Palatinose, Lactulose, D-Fruktose, D-Glukose, D-Galaktose, L-Rhamnose, D-Sorbose, D-Mannose, D-Tagatose, D-Arabinose, L-Arabinose, D-Ribose, D-Glycerinaldehyd, Maltodextrin und deren Mischungen, insbesondere ausgewählt aus der Gruppe bestehend aus Saccharose, Trehalose, Laktose, Dextrose und deren Mischungen.

Im Sinne der vorliegenden Erfindung kommen ein Vielfaches an Salze in Betracht. Die Salze, die nach der vorliegenden Erfindung Verwendung finden können, umfassen alle löslichen und unlöslichen Formen.

In einer bevorzugten Ausführungsform sind die Salze ausgewählt aus der Gruppe bestehend aus löslichen Salzen insbesondere ausgewählt aus der Gruppe bestehend aus Calciumchlorid, Calciumlactat, Calciumgluconat, Calciumcitrat, Calciumacetat, Natriumchlorid und deren Gemische, zu nennen.

In einer bevorzugten Ausführungsform liegt der Gehalt in dem in dem Schritt (a7) erhaltenen Zwischenprodukt vom Permeatpulver im Bereich von etwa 0,1 bis etwa 10 Gew.-% und der Gehalt der Mischung des Schrittes (a6) im Bereich von etwa 0,01 bis etwa 2 Gew.-%.

In einer weiteren bevorzugten Ausführungsform, liegt der Gehalt in dem in dem Schritt (a7) erhaltenen Zwischenprodukt vom Permeatpulver im Bereich von etwa 0,5 bis etwa 3 Gew.-%, insbesondere bevorzugt von etwa 1 Gew.-%, und der Gehalt der Mischung des Schrittes (a6) im Bereich von etwa 0,1 bis etwa 0,5 Gew.-%, insbesondere bevorzugt von etwa 0,2 Gew.-%.

In einer weiteren bevorzugten Ausführungsform, ist das Gewichtsverhältnis Permeate in Pulverform (Schritt (a5)): dritte Komponente (Schritte (a6)) etwa 20:1, vorzugsweise 10:1 und insbesondere 5:1.

In einer bevorzugten Ausführungsform erfolgt die Wärmebehandlung des Schrittes (a8) bei einer Temperatur im Bereich von 60 bis 145 °C, vorzugsweise von 70 bis 140 °C.

Der Abkühlungsschritt (a9) erfolgt bei einer Temperatur im Bereich von 5 bis 30 °C, vorzugsweise im Bereich von 8 bis 25 °C.

Gemäß des Schrittes (a8) kann das Produkt getrocknet werden, so dass ein Endprodukt in Pulverform erhalten wird. Im Sinne der vorliegenden Erfindung kommen alle für den Fachmann bekannten Trocknungstechniken in Frage, die verwendet werden, um Produkte in Pulverform herzustellen.

### GEWERBLICHE ANWENDBARKEIT

Ein weiterer Gegenstand der Erfindung betrifft die Verwendung eines nach den Schritten (a2) bis (a5) des oben geschilderten Verfahrens hergestellten Permeats in Pulverform aus der Filtration eines Milchproduktes als Schäumer und Schaumstabilisator für Milchprodukte. Dabei wird ein Permeat aus der Ultrafiltration von Magermilch eingesetzt, wobei die Einsatzmengen 0,1 bis 10 Gew.-% - bezogen auf die Milchprodukte - betragen.

### BEISPIELE

### BEISPIEL 1

Magermilch wurde bei einer Temperatur von 45 °C einer Ultrafiltration mit einer Spiralwickelmembran (Trennschärfe 25.000 Dalton) unterworfen. Das so erhaltene Permeat wurde zum einen ohne Wärmebehandlung, und zum anderen nach Erhitzen über einen Zeitraum von 1 Minute auf Temperaturen zwischen 95 und 140 °C anschließend sprühgetrocknet und mit den Komponenten (a) und (c) versetzt. Das erhaltene Zwischenprodukt wurde in einen geeichten Standzylinder gegeben, mit einem Rührwerk auf höchster Stufe 1 Minute aufgeschäumt und anschließend die Schaumhöhe als Funktion der Zeit bestimmt. Die Ergebnisse sind in **Tabelle 1** zusammengefasst. Die Beispiele 1 bis 4 sind erfindungsgemäß. Das Vergleichsbeispiel V1 wurde mit Magermilch ohne Zusatz durchgeführt. Das Vergleichsbeispiel V2 wurde mit Magermilch und Permeat in Flüssigform ohne Komponente (c) durchgeführt. Das Vergleichsbeispiel V3 wurde mit Magermilch und Permeat in Pulverform ohne Komponente (c) durchgeführt. Das Vergleichsbeispiel V4 wurde mit Magermilch und Permeat in Flüssigform mit Komponente (c) durchgeführt.

**Tabelle 1**

| Schaumhöhe und Schaumbeständigkeit (ml) | | | | | | |
|---|---|---|---|---|---|---|
| **Bsp.** | **Temperatur** | **Permeat in Flüssig-oder Pulverform** | **Sofort** | **Nach 5 min** | **Nach 10 min** | **Nach 30 min** |
| V1 | | | 40 | 20 | 0 | 0 |
| V2 | unbehandelt | Flüssigform | 110 | 90 | 50 | 10 |
| V3 | unbehandelt | Pulverform | 130 | 100 | 60 | 10 |
| 1⁽¹⁾ | unbehandelt | Pulverform | 150 | 110 | 80 | 30 |
| 2⁽¹⁾ | 95°C | Pulverform | 220 | 200 | 140 | 80 |
| 3⁽¹⁾ | 125 °C | Pulverform | 270 | 240 | 220 | 170 |
| 4⁽¹⁾ | 140 °C | Pulverform | 200 | 180 | 120 | 70 |
| V4⁽¹⁾ | 125 °C | Flüssigform | 250 | 220 | 200 | 150 |

| | | | | | | |
|---|---|---|---|---|---|---|
| ⁽¹⁾: Gehalt an Komponente (c) = 0,2 Gew.-%; | | | | | | |

Überraschenderweise wurde gefunden, dass zum einen die Permeate in Flüssig- und Pulverform eine viel höhere Schaumkraft als die Magermilch selbst besitzen und zum anderen die Wärmebehandlung einen Einfluss auf Schaumhöhe und Schaumbeständigkeit besitzt: die besten Ergebnisse wurden erhalten, wenn man die Permeate bei Temperaturen um 125 °C nachbehandelt.

### BEISPIEL 2

Jeweils 3, 5 oder 8 ml Milchpermeat gemäß den Beispielen 1 bis 4 wurden 100 g Magermilch zugegeben. Die Ansätze wurden wieder in Standzylinder gefüllt, wie in Beispiel 1 beschrieben aufgeschäumt und anschließend die Schaumhöhen und Schaumbeständigkeit bestimmt. Die Ergebnisse sind in **Tabelle 2** zusammengefasst. Die Beispiele 5 bis 13 sind erfindungsgemäß, Beispiel V2 dient zum Vergleich.

**Tabelle 2**

| Schaumhöhe und Schaumbeständigkeit (ml) | | | | | |
|---|---|---|---|---|---|
| **Bsp.** | **Permeat Bsp.** | **Menge (g)** | **Sofort** | **Nach 5 min** | **Nach 10 min** |
| V2 | - | 0 | 40 | 20 | 0 |
| 5 | 2 | 1 | 80 | 60 | 30 |
| 6 | | 5 | 100 | 70 | 40 |
| 7 | | 8 | 110 | 70 | 40 |
| 8 | 3 | 1 | 100 | 80 | 50 |
| 9 | | 5 | 120 | 100 | 60 |
| 10 | | 8 | 120 | 100 | 60 |
| 11 | 4 | 1 | 70 | 50 | 30 |
| 12 | | 5 | 80 | 50 | 30 |
| 13 | | 8 | 80 | 40 | 30 |

Auch in diesem Experiment erwiesen sich die bei mittleren Temperaturen erhitzten Permeate wirksamer als diejenigen, die bei niedrigeren oder höheren Temperaturen erhalten worden waren. Es zeigte sich ferner, dass ein Zusatz von 5 Gew.-% ausreichend ist um einen hohen Anfangsschaum zu erzeugen, der hinreichend lange stabil bleibt. Höhere Konzentrationen führen zu keinem proportionalen Anstieg mehr.

## Patentansprüche

1. Verfahren zur Herstellung einer aufschäumbaren Milchzubereitung, umfassend die folgenden Schritte:
(a1) Bereitstellen eines ersten Milchproduktes ausgewählt aus der Gruppe, die gebildet wird von Magermilch, im Fettgehalt eingestellter Milch, pasteurisierter Milch, hocherhitzter Milch, ultrahocherhitzter Milch, Kondensmilch, Molke, Edelmolke, Buttermilch, Sauermilch, Sauermilchprodukte, Rahm, Sahne, Joghurt, Kefir und Ayran sowie deren Gemische;
(a2) Bereitstellen einer Magermilch;
(a3) Unterwerfen der Magermilch einer Ultrafiltration unter Erhalt eines Permeats und eines Retentats, wobei die Ultrafiltration mit einer Membran mit einem mittleren Porendurchmesser im Bereich von etwa 15.000 bis etwa 25.000 Dalton und bei Temperaturen im Bereich von 35 bis 60 °C durchgeführt wird;
(a4) Wärmebehandlung über einen Zeitraum von etwa 4 Sekunden bis 5 Minuten bei einer Temperatur von etwa 90 bis 140°C des Permeats des Schritts (a3);
(a5) Trocknung des temperaturbehandelten Permeats des Schritts (a4) mittels Sprühtrocknung unter Erhalt eines Permeatpulvers;
(a6) Bereitstellen einer dritten Komponente ausgewählt aus der Gruppe bestehend aus tierischen Proteinen, pflanzlichen Proteinen, Hydrokolloiden, Emulgatoren, Zucker, Salzen oder deren Gemische;
(a7) Bereitstellen einer Mischung aus dem ersten Milchprodukt des Schrittes (a1), dem Permeatpulver des Schritts (a5), und der dritten Komponente des Schrittes (a6);
(a8) Wärmebehandlung der Mischung aus dem Schritt (a7) unter Erhalt eines flüssigen Produkts oder Trocknung der Mischung aus dem Schritt (a7) unter Erhalt eines Pulvers
(a9) Kühlung des flüssigen Produktes oder gegebenenfalls des Pulvers des Schrittes (a8); und
(a10) Abfüllung des flüssigen Produktes oder des Pulvers des Schrittes (a9) oder des Pulvers des Schrittes (a8).

2. Verfahren nach Anspruch 1, wobei das erste Milchprodukt der Schritte (a1) einen Fettgehalt von mindestens 1,5 Gew.-% aufweist.

3. Verfahren nach Anspruch 1 oder 2, wobei das Permeatpulver des Schrittes (a5) eine Trockenmasse von 85 bis 98 Gew.-% aufweist.

4. Verfahren nach mindestens einem der vorangehenden Ansprüche 1 bis 3, wobei der Gehalt an Lactose des Permeatpulvers des Schrittes (a5) im Bereich von 72 bis 90 Gew.-% liegt.

5. Verfahren nach mindestens einem der vorangehenden Ansprüche 1 bis 4, wobei die Wärmebehandlung des Schrittes (a8) bei einer Temperatur im Bereich von 60 bis 145 °C erfolgt.

6. Verfahren nach mindestens einem der vorangehenden Ansprüche 1 bis 5, wobei der Abkühlungsschritt (a9) bei einer Temperatur im Bereich von 5 bis 30 °C erfolgt.

7. Verwendung eines nach den Schritten (a2) bis (a5) des Verfahrens nach mindestens einem der vorangehenden Ansprüche 1 bis 6 hergestellten Permeats als Schäumer und Schaumstabilisator für Milchprodukte, wobei die Einsatzmengen 0,1 bis 10 Gew.-% - bezogen auf die Milchprodukte - betragen.

## Claims

1. A process for the production of a foamed milk composition, comprising the following steps:
(a1) providing a first dairy product selected from the group consisting of skimmed milk, milk with a set fat content, pasteurised milk, high temperature treated milk, ultrahigh temperature treated milk, condensed milk, whey, fine whey, buttermilk, soured milk, soured milk products, cream, yoghurt, kefir and ayran and their mixtures;
(a2) providing a skimmed milk;
(a3) subjecting the skimmed milk to ultrafiltration to obtain a permeate and a retentate, wherein the ultrafiltration is performed with a membrane having an average pore size in the range from about 15,000 to about 25,000 Daltons and at temperatures in the range of 35 to 60°C;
(a4) subjecting the permeate of step (a3) to heat treatment for a period from about 4 to about 5 minutes at temperatures of about 90 to 140°C;
(a5) drying of the heat-treated permeate from step (a4) by spray drying to obtain a permeate powder;
(a6) providing a third component selected from the group consisting of animal proteins, vegetable proteins, hydrocolloids, emulsifiers, sugars, salts or mixtures thereof;
(a7) providing a mixture of the first milk product of step (a1), the permeate powder of step (a5), and the third component of step (a6);
(a8) subjecting the mixture from step (a7) to heat treatment to obtain a liquid product or drying of the mixture from step (a7) to obtain a powder;
(a9) cooling the liquid product or alternatively the powder of step (a8); and
(a 10) filling of the liquid product or the powder of step (a9) or the powder of step (a8).

2. Process according to claim 1, wherein the first dairy product of step (a1) has a fat content of at least 1.5% by weight.

3. Process according to the claim 1 or 2, wherein the permeate powder of step (a5) has a dry mass of 85 to 98% by weight.

4. Process according to at least one of the preceding claims 1 to 3, wherein the lactose content of the permeate powder of step (a5) lies in the range from 72 to 90% by weight.

5. Process according to at least one of the preceding claims 1 to 4, wherein the heat treatment of step (a8) is carried out at a temperature in the range from 60 to 145 °C.

6. Process according to at least one of the preceding claims 1 to 5, wherein the cooling step (a9) is carried out at a temperature in the range from 5 to 30 °C.

7. Use of a permeate produced according to steps (a2) to (a5) of the process according to at least one of the preceding claims 1 to 6 as a foamer and foam stabiliser for dairy products, being the amounts used 0.1 to 10% by weight, based on the dairy products.

## Revendications

1. Procédé de production d'une composition de lait moussable, comprenant les étapes suivantes :
(a1) fourniture d'un premier produit laitier choisi dans le groupe formé par le lait écrémé, le lait à teneur ajustée en matière grasse, le lait pasteurisé, le lait à haute pasteurisation, le lait UHT, le lait condensé, le lactosérum, le lactosérum noble, le babeurre, le lait fermenté, les produits de lait fermenté, la crème, la crème fouettée, le yaourt, le kéfir et l'ayran, ainsi que leurs mélanges ;
(a2) fourniture d'un lait écrémé ;
(a3) soumission du lait écrémé à une ultrafiltration avec obtention d'un perméat et d'un rétentat, l'ultrafiltration étant mise en oeuvre avec une membrane ayant un diamètre moyen de pore dans la plage d'environ 15 000 à environ 25 000 daltons et à des températures dans la plage de 35 à 60 °C ;
(a4) traitement thermique sur une durée d'environ 4 secondes à 5 minutes à une température d'environ 90 à 140 °C du perméat de l'étape (a3) ;
(a5) séchage du perméat ayant subi un traitement thermique de l'étape (a4) par séchage par atomisation avec obtention d'une poudre de perméat ;
(a6) fourniture d'un troisième composant choisi dans le groupe consistant en les protéines animales, les protéines végétales, les hydrocolloïdes, les émulsifiants, les sucres, les sels ou leurs mélanges ;
(a7) fourniture d'un mélange du premier produit laitier de l'étape (a1), de la poudre de perméat de l'étape (a5) et du troisième composant de l'étape (a6) ;
(a8) traitement thermique du mélange de l'étape (a7) avec obtention d'un produit liquide ou séchage du mélange de l'étape (a7) avec obtention d'une poudre ;
(a9) refroidissement du produit liquide ou éventuellement de la poudre de l'étape (a8) ; et
(a10) remplissage du produit liquide ou de la poudre de l'étape (a9) ou de la poudre de l'étape (a8).

2. Procédé selon la revendication 1, dans lequel le premier produit laitier de l'étape (a1) présente une teneur en matière grasse d'au moins 1,5 % en poids.

3. Procédé selon la revendication 1 ou 2, dans lequel la poudre de perméat de l'étape (a5) présente un extrait sec de 85 à 98 % en poids.

4. Procédé selon au moins l'une des revendications précédentes 1 à 3, dans lequel la teneur en lactose de la poudre de perméat de l'étape (a5) est comprise dans la plage de 72 à 90 % en poids.

5. Procédé selon au moins l'une des revendications précédentes 1 à 4, dans lequel le traitement thermique de l'étape (a8) a lieu à une température dans la plage de 60 à 145 °C.

6. Procédé selon au moins l'une des revendications précédentes 1 à 5, dans lequel l'étape de refroidissement (a9) a lieu à une température dans la plage de 5 à 30 °C.

7. Utilisation d'un perméat fabriqué selon les étapes (a2) à (a5) du procédé selon au moins l'une des revendications précédentes 1 à 6, en tant qu'agent moussant ou stabilisant de mousse pour produits laitiers, les quantités utilisées étant de 0,1 à 10 % en poids par rapport aux produits laitiers.
